## Europäisches Patentamt

## European Patent Office

## Office européen des brevets

(19)

(11) Veröffentlichungsnummer: **0 298 317
B1**

(12)

# EUROPÄISCHE PATENTSCHRIFT

(45) Veröffentlichungstag der Patentschrift:
**19.12.90**

(51) Int. Cl.⁵: **C12G 3/08**

(21) Anmeldenummer: **88110079.6**

(22) Anmeldetag: **24.06.88**

(54) Weinherstellungsverfahren.

(30) Priorität: **08.07.87 DE 3722535**

(43) Veröffentlichungstag der Anmeldung:
**11.01.89 Patentblatt 89/2**

(45) Bekanntmachung des Hinweises auf die Patenterteilung:
**19.12.90 Patentblatt 90/51**

(84) Benannte Vertragsstaaten:
**AT BE CH DE ES FR GB IT LI SE**

(56) Entgegenhaltungen:
**FR-A- 2 231 749
FR-A- 2 599 047
GB-A- 2 130 497**

**Die Akte enthält technische Angaben, die nach dem Eingang der Anmeldung eingereicht wurden und die nicht in dieser Patentschrift enthalten sind.**

(73) Patentinhaber: **Petershans, Horst, Schillerstrasse 160, D-7050 Bittenfeld(DE)**

(72) Erfinder: **Petershans, Horst, Schillerstrasse 160, D-7050 Bittenfeld(DE)**

(74) Vertreter: **Kinkelin, Ulrich, Dipl.-Ing., Weimarer Strasse 32/34 Auf dem Goldberg, D-7032 Sindelfingen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren gemäß dem Oberbegriff des Hauptanspruchs.

Auf dem Weingebiet herrscht nach wie vor ein sehr großer Weinüberschuß, der hohe Subventionen erfordert, und zwar hinsichtlich seiner Herstellung in der einen Phase und seiner Vernichtung in der anderen Phase. Bekanntlich ist wegen solcher und ähnlicher Geldausgaben sogar die Einigung Europas in Schwierigkeiten geraten, weil hierfür dann zu wenig Geld übrig bleibt.

Abgesehen von den politischen Folgen hat der Wein auch gesundheitliche Folgen. Dies reicht von einem Zustand, bei dem man z.B. bei Verhandlungen nicht mehr ganz so fit ist, nachdem man vorher Alkohol getrunken hat, bis zu Verelendungserscheinungen und Unfällen mit Todesfolge im Beruf, Haushalt und im Straßenverkehr. Zum Beispiel übersteigt in England die Ausgabe für Alkohol diejenigen Ausgaben für Kleidung und Autos.

Ungleich anderen Getränken hat der Wein sehr starke sensorische Nuancen, weshalb er auch von daher für die unterschiedlichsten Gelegenheiten paßt. Er übertrifft darin bei weitem das Bier und auch den Tee.

Auch seine Farben sind bekanntlich recht unterschiedlich und passen auch von daher zu den verschiedensten Gelegenheiten. Wegen des Alkoholgehalts hat der Wein auch den Vorzug, daß er haltbar ist, und auch dann haltbar ist, wenn bei seiner Herstellung nicht mit absoluter Hygiene gearbeitet wird.

Geringe Mengen Alkohol haben sogar den Vorteil, gesundheitsfördernd zu sein.

Nun trinkt natürlich niemand aus den verschiedensten Gründen z.B. ein Schnapsglas voll Wein, was ja an sich wegen der kleinen Menge den Alkoholgehalt auch reduzieren würde. Vielmehr ist das Standardmaß, in dem Wein ausgeschenkt wird, etwa 1/4 Liter, mit der Untergrenze bei 1/8 Liter und der Obergrenze bei 1/2 Liter.

Bekannt ist es, Wein mit Mineralwasser zu mischen, um so den Alkoholgehalt zu "verdünnen". Aber damit werden auch die geschmacksbestimmenden Inhalte des Weines ebenso verdünnt. Diese Methode liefert daher allenfalls ein zum Durstlöschen geeignetes Getränk, aber keinen Wein.

Ähnlich verhält es sich mit einer Mischung aus Wein und Fruchtsaft gemäß FR-A 2 231 749, weil das resultierende Getränk geschmacklich vom Fruchtsaft geprägt wird, selbst wenn dies ein Traubensaft ist.

Auf dem Markt gibt es auch Weine, denen der Alkohol bis auf weniger als 1 Volumenprozent entzogen wurde, jedoch werden dazu offenbar Verfahren angewandt, die mit dem Alkohol auch einen Großteil der geschmacklich wichtigen Bestandteile entfernen, so daß das Endprodukt allenfalls als unzureichender Weinersatz für Diabetiker oder dergleichen gelten kann.

Aus der GB-A 2 130 497 ist es bekannt, einen Originalwein mit einem alkoholreduzierten Wein (mit etwa 6 Vol% Alkohol) zu "verdünnen", um so einen im Alkoholgehalt auf etwa 7 Vol% reduzierten Wein zu gewinnen. Der alkoholreduzierte Wein wird dabei nach einem Verfahren hergestellt, das aus dem Wein mit dem Alkohol auch wesentliche Anteile der geschmacksbestimmenden Bestandteile entfernt. Aus dem abgehenden Dampf-Alkohol-Aroma-Gemisch gewinnt man zwar einen Extrakt mit etwa 75 Vol% Alkohol, der zur Brandyherstellung verwendet wird und also nicht verloren ist, aber der alkoholreduzierte Wein ist geschmacklich verarmt. Aus diesem Grund ist auch der Alkoholentziehungsgrad beschränkt auf etwa 6 Vol% Alkohol, weil anderenfalls noch mehr an Geschmack fehlen würde. Dieser geschmacksverarmte Wein mit dem relativ hohen Alkoholgehalt von 6 Vol% erlaubt nur eine geringe Zumischung von Originalwein, so daß die Mischung qualitativ nicht befriedigend ist, obgleich der Alkoholgehalt von 7 Vol% nicht wesentlich unter dem Alkoholgehalt naturbelassener Weine liegt.

Aufgabe der Erfindung ist es, ein Verfahren zur Herstellung eines im Alkoholgehalt nennenswert reduzierten, geschmacklich befriedigenden Weines anzugeben, der von weiteren Bevölkerungsteilen akzeptiert wird.

Erfindungsgemäß wird diese Aufgabe durch die kennzeichnenden Merkmale des Anspruchs 1 gelöst.

Hiernach wird der alkoholmäßig belassene Originalwein mit solchem Wein verdünnt, der bis auf den Alkohol im wesentlichen sämtliche Originalbestandteile enthält. Damit wird also der Geschmack des Originalweines nicht "verwässert", aber dennoch der Alkoholgehalt der Gesamtmischung erheblich herabgesetzt, wobei zufolge des minimalen Restalkoholgehalts (etwa 0,08 Vol%) des entalkoholisierten Weines ein hoher Anteil von Originalwein zulässig ist, der die Mischung sensorisch ausbaut.

Zur Herstellung des entalkoholisierten Weines eignet sich insbesondere das in der FR-A 2 599 047 bzw. DE-A 3 617 654 angegebene Verfahren, das in einer geschlossenen Anlage abläuft.

Die Mischung kann ein Kellermeister mit seinem Fachwissen durchführen. Zum Beispiel kann er den naturbelassenen Qualitätswein z.B. von denjenigen Sorten nehmen, die solche extremen sensorischen Eigenschaften aufweisen, daß sie an sich nur für Liebhaber verkauft werden können, in der Verdünnung mit dem entalkoholisierten Wein jedoch zumindest die Stufe eines Qualitätsweines erreichen.

Mit dem alkoholreduzierten Wein bekommt man auch das Kalorienproblem eher in den Griff, das sich einmal daraus ergibt, daß Alkohol sehr viele Kalorien hat und dann außerdem noch den Appetit anregt, so daß mehr gegessen wird, als an sich die Körperphysiologie verlangt.

Man ist nunmehr in der Lage, üblich große Gemäße auszuschenken. Dies hindert schon einen großen Personenkreis daran, zuviel zu trinken, denn viele Personen haben einen viel zu kleinen Magen als daß sie z.B. 1/2 oder 3/4 Liter Flüssigkeit hintereinander trinken könnten.

Man kann daher nun auch "voll" einschenken und das Gezeter ist überflüssig, das stets entsteht, wenn ein Gast nur einen Bruchteil eines Glases eingeschenkt haben will. Was die Gästehöflichkeit anlangt, so könnte man alkoholmäßig nunmehr das Doppelte bis Dreifache mengenmäßig trinken, ohne auf höhere Alkoholgehalte wie seither zu kommen.

Selbst Alkoholsüchtigen ist nun aus Mengengründen eine Schranke gesetzt.

Durch die Erfindung ist es möglich, zumindest Qualitätswein alkoholreduziert herzustellen. Das Verfahren läßt sich jedoch aber auch auf Kabinettwein oder Spätlese anwenden.

Je fortschrittlichere Verfahren zur Herstellung des stark alkoholreduzierten Weines verwendet werden, desto niedriger kann der Gesamtalkoholgehalt gehalten werden. Ein bevorzugtes Ausführungsbeispiel lautet wie folgt:

70% Wein mit 0.08% Alkohol + 30% Qualitätswein mit 10% Alkohol = neuer alkoholreduzierter Qualitätswein mit 3,8% Alkohol.

Zur Herstellung des entalkoholisierten Weines (mit 0,08 Vol% Alkohol) wird ein auf 11% Alkoholgehalt angereicherter Basiswein genommen. Setzt man nun dem entalkoholisierten Wein wieder einen Teil dieses angereicherten Basisweines zu, kann letzterer nur bis zu 40% der Mischung ausmachen, um den Alkoholgehalt der Mischung unter 5% zu halten.

In bevorzugter Ausgestaltung setzt man dem in vorstehender Weise gewonnenen entalkoholisierten Wein einen unangereicherten Wein (mit z.B. 8% Alkoholgehalt) zu, woraus jetzt 50 bis 60% der Mischung bestehen können. Damit ist der Anteil des geschmacklich prägenden Originalweines höher, wodurch der Geschmack der Mischung besser ist.

Hat der Originalwein selbst einen noch geringeren Alkoholgehalt, kann sein Mengenanteil an der Mischung bis zu 70% erreichen.

Beispiel 1

1000 Liter Wein sollen alkoholreduziert werden.

Dazu werden 700 Liter Wein auf 0,08% Vol. Alkohol entalkoholisiert, hinzu kommen 300 Liter Originalwein mit 10% Vol. Alkohol, dies ergibt 1000 Liter alkoholreduzierten Qualitätswein mit 3,8% Vol. Alkohol.

Beispiel 2

Im Herbst ernten wir 1000 Liter Most mit 65° Oechsle.

500 Liter von diesem Most werden original vergoren = 8% Vol. Alkohol.

500 Liter werden mit Zucker auf 85° Oechsle angereichert. Die Anreicherung bewirkt nicht nur bei der Vergärung einen höheren Alkoholgehalt, sondern es werden auch wertvolle Substanzen erzeugt, wie z.B. Aromastoffe, Bouquettstoffe und Glyzerine. Diesen 10,5%igen Wein entalkoholisieren wir auf 0,08% Vol. Alkohol, so daß sich ein fruchtiger, blumiger alkoholreduzierter Wein mit 4% Vol. Restalkohol ergibt.

Beispiel 3

1000 Liter Kabinettwein sollen hergestellt werden.

Es ergeben 500 Liter mit 8,5% Vol. Alkohol und 500 Liter entalkoholisiert mit 0,1% Vol. Alkohol insgesamt 1000 Liter alkoholreduzierten Kabinettwein mit 4,3% Volumen Restalkohol.

**Patentansprüche**

1. Verfahren zur Herstellung eines Weines mit einem Alkoholgehalt von 2 bis 5 Volumenprozent, dadurch gekennzeichnet, daß er aus einer Mischung aus entalkoholisiertem Wein und 10 bis 70 Volumenprozenten alkoholmäßig belassenem Originalwein besteht, daß der Originalwein überwiegend mindestens ein Qualitätswein ist, daß der entalkoholisierte Wein aus Wein nach einem Verfahren hergestellt wird, das in einer geschlossenen Anlage abläuft und im wesentlichen sämtliche Bestandteile des Weines zusammenführt, ausgenommen des abzuführenden Alkoholgehalts.

2. Verfahren nach Anspruch 1, dadurch gekennzeichnet, daß der Originalwein ganz oder überwiegend ein Kabinettwein ist.

3. Verfahren nach Anspruch 1, dadurch gekennzeichnet, daß der Originalwein ganz oder überwiegend eine Spätlese ist.

4. Verfahren nach Anspruch 1, dadurch gekennzeichnet, daß der Originalwein ganz oder überwiegend aus der Traubensorte "Müller-Thurgau" gewonnen wird.

5. Verfahren nach Anspruch 1, dadurch gekennzeichnet, daß der Originalwein ganz oder überwiegend aus der Traubensorte "Kerner" gewonnen wird.

6. Verfahren nach Anspruch 1, dadurch gekennzeichnet, daß der Originalwein ganz oder überwiegend aus der Traubensorte "Bacchus" gewonnen wird.

7. Verfahren nach Anspruch 1, dadurch gekennzeichnet, daß der Originalwein ganz oder überwiegend aus der Traubensorte "Morio-Muskat" gewonnen wird.

8. Verfahren nach Anspruch 1, dadurch gekennzeichnet, daß der Originalwein ganz oder überwiegend aus der Traubensorte "Muskateller" gewonnen wird.

9. Verfahren nach Anspruch 1, dadurch gekennzeichnet, daß der Originalwein ganz oder überwiegend aus der Traubensorte "Gewürztraminer" gewonnen wird.

10. Verfahren nach Anspruch 1, dadurch gekennzeichnet, daß der Originalwein ganz oder überwiegend aus der Traubensorte "Spätburgunder" gewonnen wird.

11. Verfahren nach Anspruch 1, dadurch gekennzeichnet, daß der Originalwein ganz oder überwiegend aus der Traubensorte "Lemberger" gewonnen wird.

12. Verfahren nach Anspruch 1, dadurch gekennzeichnet, daß der Originalwein ganz oder überwiegend aus der Traubensorte "Schwarz-Riesling" gewonnen wird.

13. Verfahren nach Anspruch 1, dadurch gekennzeichnet, daß der Originalwein ganz oder überwiegend aus der Traubensorte "Cabernet Savignon" gewonnen wird.

14. Verfahren nach Anspruch 1, dadurch gekennzeichnet, daß der Originalwein ganz oder überwiegend aus der Traubensorte "Burgunder" gewonnen wird.

15. Verfahren nach Anspruch 1, dadurch gekennzeichnet, daß der Originalwein ganz oder überwiegend aus der Traubersorte "Pinot" gewonnen wird.

16. Verfahren nach Anspruch 1, dadurch gekennzeichnet, daß der Originalwein ein Weißwein ist und daß dessen Blume duftig und/oder ausgeprägt und/oder geschmackvoll und/oder inhaltsreich und/oder voluminös ist .

17. Verfahren nach Anspruch 1, dadurch gekennzeichnet, daß der Originalwein ganz oder überwiegend ein Rotwein ist, der noch Gerbstoffe enthält und/oder schwer ist und/oder einen Alkoholgehalt oberhalb der Bekömmlichkeit hat und/oder dessen Weingeschmack ausgeprägt ist und/oder dessen Aromastoffe ausgeprägt sind.

18. Verfahren nach Anspruch 1, dadurch gekennzeichnet, daß der entalkoholisierte Wein nach dem Verfahren der fraktionierten Destillation hergestellt wird.

19. Verfahren nach Anspruch 1, dadurch gekennzeichnet, daß der Originalwein einen Anteil von 10 bis 40 Volumenprozenten hat.

## Revendications

1. Procédé de production d'un vin ayant une teneur en alcool de 2 à 5% en volume, caractérisé en ce qu'il consiste en un mélange d'un vin désalcoolisé et de 10 à 70% en volume d'un vin d'origine chargé d'alcool, que le vin d'origine est principalement au moins un vin de qualité, que le vin désalcoolisé est préparé à partir de vin par un procédé qui se déroule dans une installation fermée et rassemble essentiellement tous les composants du vin, à l'exception de l'alcool à évacuer.

2. Procédé suivant la revendication 1, caractérisé en ce que le vin d'origine est en totalité ou principalement un vin de Cabinet.

3. Procédé suivant la revendication 1, caractérisé en ce que le vin d'orgine est en totalité ou principalement un vin de vendange tardive.

4. Procédé suivant la revendication 1, caractérisé en ce que le vin d'origine est en totalité ou principalement obtenu à partir du cépage "Müller-Thurgau".

5. Procédé suivant la revendication 1, caractérisé en ce que le vin d'origine est en totalité ou principalement obtenu à partir du cépage "Kerner".

6. Procédé suivant la revendication 1, caractérisé en ce que le vin d'origine est en totalité ou principalement obtenu à partir du cépage "Bacchus".

7. Procédé suivant la revendication 1, caractérisé en ce que le vin d'origine est en totalité ou principalement obtenu à partir du cépage "Morio-Muskat".

8. Procédé suivant la revendication 1, caractérisé en ce que le vin d'origine est en totalité ou principalement obtenu à partir du cépage "Muskateller".

9. Procédé suivant la revendication 1, caractérisé en ce que le vin d'origine est en totalité ou principalement obtenu à partir du cépage "Gewürztraminer".

10. Procédé suivant la revendication 1, caractérisé en ce que le vin d'origine est en totalité ou principalement obtenu à partir du cépage "Spätburgunder".

11. Procédé suivant la revendication 1, caractérisé en ce que le vin d'origine est en totalité ou principalement obtenu à partir du cépage "Lemberger".

12. Procédé suivant la revendication 1, caractérisé en ce que le vin d'origine est en totalité ou principalement obtenu à partir du cépage "Schwarz-Riesling".

13. Procédé suivant la revendication 1, caractérisé en ce que le vin d'origine est en totalite ou principalement obtenu à partir du cépage "Cabernet Sauvignon".

14. Procédé suivant la revendication 1, caractérisé en ce que le vin d'origine est en totalité ou principalement obtenu à partir du cépage "Burgunder".

15. Procédé suivant la revendication 1, caractérisé en ce que le vin d'origine est en totalité ou principalement obtenu à partir du cépage "Pinot".

16. Procédé suivant la revendication 1, caractérisé en ce que le vin d'origine est un vin blanc et en ce que son bouquet est léger et/ou marqué et/ou plein et/ou riche et/ou volumineux.

17. Procédé suivant la revendication 1, caractérisé en ce que le vin d'origine est en totalité ou principalement un vin rouge qui contient encore des tannins et/ou est lourd et/ou a une teneur en alcool supérieure à la valeur convenable et/ou dont le goût de vin est marqué et/ou dont les arômes sont marqués.

18. Procédé suivant la revendication 1, caractérisé en ce que le vin désalcoolisé est préparé par le procédé de la distillation fractionnée.

19. Procédé suivant la revendication 1, caractérisé en ce que le vin d'origine forme une proportion de 10 à 40% en volume.

## Claims

1. Process for the production of a wine having an alcohol content of from 2 to 5% by volume, characterized in that it comprises a blend of dealcoholized wine with from 10 to 70% by volume of original wine with unadjusted alcohol content, in that the original wine is predominantly at least a wine of certified quality, in that the dealcoholized wine is produced from wine by a process which takes place in a closed unit and essentially combines all the constituents of the wine except the alcohol content which is to be removed.

2. The process according to Claim 1, characterized in that the original wine is wholly or predominantly a cabinet wine.

3. The process according to Claim 1, characterized in that the original wine is wholly or predominatly a wine made from late-picked grapes.

4. The process according to Claim 1, characterized in that the original wine is wholly or predominantly made from the "Müller-Thurgau" grape variety.

5. The process according to Claim 1, characterized in that the original wine is wholly or predominantly made from the "Kerner" grape variety.

6. The process according to Claim 1, characterized in that the original wine is wholly or predominantly made from the "Bacchus" grape variety.

7. The process according to Claim 1, characterized in that the original wine is wholly or predominantly made from the "Morio-Muskat" grape variety.

8. The process according to Claim 1, characterized in that the original wine is wholly or predominantly made from the "Muscatel" grape variety.

9. The process according to Claim 1, characterized in that the original wine is wholly or predominantly made from the "Gewürztraminer" grape variety.

10. The process according to Claim 1, characterized in that the original wine is wholly or predominantly made from the "Spätburgunder" grape variety.

11. The process according to Claim 1, characterized in that the original wine is wholly or predominantly made from the "Lemberger" grape variety.

12. The process according to Claim 1, characterized in that the original wine is wholly or predominantly made from the "Schwarz-Riesling" grape variety.

13. The process according to Claim 1, characterized in that the original wine is wholly or predominantly made from the "Cabernet Savignon" grape variety.

14. The process according to Claim 1, characterized in that the original wine is wholly or predominantly made from the "Burgunder" grape variety.

15. The process according to Claim 1, characterized in that the original wine is wholly or predominantly made from the "Pinot" grape variety.

16. The process according to Claim 1, characterized in that the original wine is a white wine and in that the bouquet thereof is fragrent and/or distinctive and/or aromatic and/or full and/or big.

17. The process according to Claim 1, characterized in that the original wine is wholly or predominantly a red wine which still contains tannins and/or is heavy and/or has a higher alcohol content than is beneficial and/or has a pronounced wine flavour and/or pronounced aromatic constituents.

18. The process according to Claim 1, characterized in that the dealcoholized wine is produced by the process of fractional distillation.

19. The process according to Claim 1, characterized in that the proportion of the original wine is from 10 to 40% by volume.